Europäisches Patentamt

European Patent Office

Office européen des brevets

(11) Veröffentlichungsnummer : **0 150 784**
**B1**

(12) **EUROPÄISCHE PATENTSCHRIFT**

(45) Veröffentlichungstag der Patentschrift :
28.06.89

(51) Int. Cl.⁴ : **G 01 K 7/18**, G 01 K 7/22,
H 01 C 17/24

(21) Anmeldenummer : 85100547.0

(22) Anmeldetag : 19.01.85

(54) Verfahren zum Abgleich eines Temperaturfühlers.

(30) Priorität : 08.01.85 CH 54/85
01.02.84 CH 462/84

(43) Veröffentlichungstag der Anmeldung :
07.08.85 Patentblatt 85/32

(45) Bekanntmachung des Hinweises auf die Patenterteilung : 28.06.89 Patentblatt 89/26

(84) Benannte Vertragsstaaten :
AT BE CH DE FR GB IT LI LU NL SE

(56) Entgegenhaltungen :
EP--A-- 0 036 247
GB--A-- 1 474 731
GB--A-- 1 566 151
US--A-- 4 146 867
US--A-- 4 378 549
IBM TECHNICAL DISCLOSURE BULLETIN, Band 25,
Nr. 4, September 1982, Seiten 2003-2004, New York,
US; Y.C. KIANG u.a.: "Folded pattern for film resistor
with trimmable elements in binary sequence"
Elektronik heute, Polyscope plus 14-15/87
Forschung und Technik, Neue Zürcher Zeitung Nr. 57

(73) Patentinhaber : **Koch Elektronik AG**
**Zugerstrasse 186**
**CH-6314 Unterägeri (CH)**

(72) Erfinder : **Horn, Peter, Dr.**
**Birchstrasse 159**
**CH-8156 Oberhasli (CH)**

(74) Vertreter : **Frei, Alexandra Sarah**
**Frei Patentanwaltsbüro Hedwigsteig 6 Postfach 95**
**CH-8029 Zürich (CH)**

## Beschreibung

Die Erfindung betrifft ein Verfahren zum Abgleich eines Temperaturfühlers mit für einen Abgleich vorgesehen Trimmbahnen.

Temperaturfühler, insbesondere in der Dünn- und Dickschichttechnologie hergestellte Temperaturfühler, weisen eine auf geeignete Substrate (Keramik, Glas usw.) aufgebrachte Widerstandsschicht auf. Der Widerstand dieser Schicht ist von der Temperatur abhängig. Durch die Messung des Widerstandes kann damit die Umgebungstemperatur des Fühlers indirekt gemessen werden. Damit der gemessene Widerstandswert eines Temperaturfühlers eine genaue Temperaturmessung erlaubt, müssen die Temperaturfühler nach der Herstellung auf einen vorgewählten Sollwert bei einer bestimmten Temperatur (z. B.) 100 Ohm bei 0 Grad Celsius) abgeglichen bzw. geeicht werden. In einem Abgleichvorgang wird die Widerstandsschicht mittels Laser, Sandstrahl, Funkenerosion usw. abgetragen und dadurch hochohmiger gemacht, um den Sollwert des Widerstandes zu erreichen. Gleichzeitig während des Abtagens wird der momentane Widerstandswert gemessen, um beim Erreichen des Sollwertes den Abgleichvorgang zu stoppen. Nun führen aber alle Abgleichverfahren während der Abtragung der Widerstandsschicht gleichzeitig zu deren Erwärmung. Die Erwärmung verursacht ihrerseits eine Verfälschung des momentan gemessenen Widerstandswertes. Für eine genaue Messung müsste man den Beharrungszustand der Temperatur der Widerstandsschicht, also das Temperaturgleichgewicht jeweils abwarten. Dies führt aber zu einer wesentlichen Verteuerung des Temperaturfühlers, da die Abgleichvorrichtungen nicht mehr mit einem möglichst hohen Durchsatz arbeiten können. Sehr genaue Temperaturfühler (0.1 Grad Austauschbarkeit oder besser) sind deshalb sehr teuer und in grossen Stückzahlen nicht erhältlich. Zur Erreichung der Temperaturkonstanz von besser als 0.1 Grad mit Hilfe einer Abgleichvorrichtung, die sehr gut gegen Aenderungen der Aussentemperatur isoliert sein muss, sind Wartezeiten von mehreren Minuten bis zu einer Stunde nötig, um beim Temperaturgleichgewicht das Resultat eines Abgleichschrittes messen zu können.

Besonders schwierig ist der Abgleich von einer Vielzahl sehr kleiner Temperaturfühler, die sich in ihrer Herstellungsphase auf einem einzigen, gut wärmeleitenden Substrat befinden. Auf einem Substrat von Grösse 5 × 5 cm können z. B. mehr als 100 Temperaturfühler angeordnet werden. Bereits nach dem Abgleich des ersten Temperaturfühlers wird sich das Substrat erwärmen, wodurch die Messung der benachbarten Fühler verfälscht wird.

In der US-4,041,440 wird versucht, das Problem der Erwärmung der Widerstandsschicht beim Abgleichvorgang dadurch zu lösen, dass nicht die Widerstandsschicht sondern parallele Zuleitungen zu der Widerstandsschicht abgetragen werden. Mit diesem Abgleichverfahren sollte die Erwärmung der Widerstandsschicht selber nicht bedeutend sein. Es ist aber bekannt, dass für Temperaturfühler sehr gut wärmeleitende Substrate verwendet werden müssen, um möglichst kurze Ansprechzeiten der Fühler zu erreichen. Bei der Verwendung eines Lasers zur Abtragung einer Schicht steigen die Temperaturen der Schicht auf einige Tausend Grad an, wobei die Schicht verdampft wird. Eine Erwärmung des Substrates und damit auch der darauf angeordneten Widerstandsschicht, ist auch bei diesem Abgleichverfahren unvermeidlich. Besonders für den Abgleich einer Vielzahl von Temperaturfühlern, die sich auf einem gemeinsamen Substrat befinden, ist dieses Abgleichverfahren nicht geeignet. Dazu wird bei diesem Abgleichverfahren eine besonders unwirtschaftliche Gestaltung des Temperaturfühlers mit mehreren Schichten verlangt.

Die US-A-4 146 867 beschreibt einen abgleichbaren Widerstand für Hybridschaltkreise. Bei Widerstandsschichten, die einen sehr kleinen Temperaturkoeffizienten TK aufweisen, werden die Widerstände in der gleichen Vorrichtung gemessen und abgeglichen. Dabei muss nach jedem Trimmvorgang die Beharrungstemperatur wieder abgewartet werden. Die darin geschilderte Laserabgleichvorrichtung kann bspw. nicht zur thermischen Stabilisierung eines Substrates mit Temperaturfühlern verwendet werden. Die Temperaturkonstanz ist in einer solchen Vorrichtung nicht gewährleistet und kann die geforderte Grenze von 0.1 °C nicht erreichen.

Die GB-A-1 474 731 beschreibt einen Vorschlag zur Verbesserung der Herstellung eines Thermowiderstandes der üblichen zylindrischen Bauart (wie bei Widerständen), bei dem der elektrisch leitende Widerstandspfad auf der Zylinderoberfläche als vorbestimmtes geometrisches Muster, hier ein mäanderförmiger Filmauftrag, aufgebracht ist, der gemäss Verbesserungsvorschlag nicht die äussere Oberfläche des Zylinders abdecken soll. Zum Abgleichen des Widerstandes sind Kurzschlußstrecken vorgesehen, die entsprechend durchtrennt werden können. Mit diesem Verfahren ist die Herstellung von hochpräzisen Widerstandswerten nicht möglich.

Die EP-A-0 036 247 beschreibt einen Dünnschichtthermowiderstand und seine Herstellungsmethode, gemäss welcher der elektrische Leiter auf einem ebenen Substrat in Form eines Serpentinenmusters aufgebracht ist. Da der Widerstand nicht nur von der Länge der Serpentine, sondern auch von deren Dicke, das heisst, vom Querschnitt abhängig ist, wird ein Vorgehen zur Kompensation von Querschnittsschwankungen über den Temperaturkoeffizienten des Widerstandes, also über die Wahl des Werkstoffes, vorgeschlagen. Zum Trimmen sind zuschaltbare kurzschlußstreckenähnliche Schichtdickenajustierungen vorgesehen. Schwerpunkt ist jedoch die Herstellung von Thermoelementen mit einem vorbestimmten TK.

Die GB-A-1 566 151 beschreibt die Herstellung von gedruckten Widerständen. Das elektrisch leitende Material ist in Form einer Serpentine aufgebracht und weist, ähnlich wie die US-A-4 146 867, eine Anzahl Kurzschlussstrecken auf, die zum Einstellen des gewünschten Widerstandswertes entsprechend durchtrennt werden können. Als Nachteil gilt das wie oben schon gesagte.

Die Aufgabe der Erfindung ist, ein Verfahren zum Abgleich eines Temperaturfühlers und einen nach diesem Verfahren hergestellten Temperaturfühler zu schaffen, welche die oben beschriebenen Nachteile beseitigt und einen sehr schnellen und dadurch wirtschaftlichen Abgleich ohne Wartezeiten ermöglicht.

Eine weitere Aufgabe der Erfindung ist die Herstellung von sehr genauen Temperaturfühlern mit niedrigen Kosten zu ermöglichen.

Erfindungsgemäss wird dies durch ein im Patentanspruch 1 gekennzeichnetes Verfahren erreicht.

Im folgenden werden zwei Ausführungsformen der Erfindung anhand der beiliegenden Zeichnungen näher beschrieben.

Figur 1 zeigt in schematischer Darstellung eine Leiterbahnstruktur und

Figur 2 zeigt eine Leiterbahnstruktur mit zwei Teilstrukturen für Grob- und Feinabgleich.

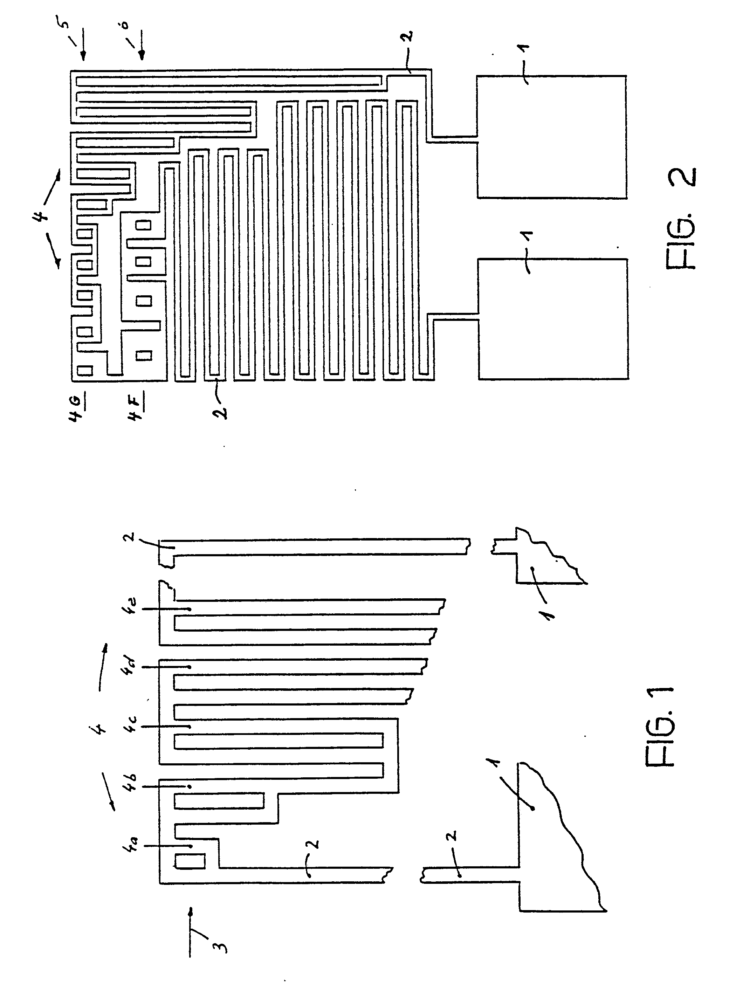

Figur 1 zeigt also eine schematische Darstellung einer Leiterbahnstruktur von thermosensitivem Material auf einem Substrat eines Temperaturfühlers, der gemäss der Erfindung hergestellt wurde. Sie ist als Teilstruktur dargestellt, welche sich gemäss erfinderischem Verfahren den gewünschten Flächenverhältnissen anpassen lässt.

An einem Ende des Temperaturfühlers können Kontakte 1 zur Kontaktierung angebracht werden. Der Widerstand des Fühlers wird durch eine langgezogene Leiterbahn 2 gebildet, die eine Vielzahl von Schleifen aufweisen kann, um eine möglichst grosse Anzahl von Quadraten (squares) zu erhalten. Der gesamte Widerstand des Fühlers berechnet sich durch die Multiplikation des spezifischen Flächenwiderstandes (Ohm/Quadrat) mit der Anzahl der Quadrate. Bei der Anzahl von 1000 Quadraten um einem spezifischen Flächenwiderstand von 0,1 Ohm/Quadrat wird der gesamte Widerstand 100 Ohm betragen. Die Anzahl der Quadrate lässt sich genau bestimmen und ist von Fühler zu Fühler sehr genau reproduzierbar. Dagegen ist die Schichtdicke grösseren Schwankungen unterworfen. Deshalb muss der Widerstand des Temperaturfühlers nach seiner Herstellung abgeglichen werden. Der Abgleich kann in einer dafür vorgesehenen Teilstruktur (4) entlang einer Linie (3) stattfinden. In der Teilstruktur (4) sind zu der Leiterbahn (2) Trimmbahnen (4a, 4b, ...) parallel geschaltet. Durch Unterbrechung von Trimmbahnen wird der Widerstand des Temperaturfühlers ansteigen. Wird die Trimmbahn 4a unterbrochen, die eine Parallelschaltung von jeweils 4 Quadraten bildet, so wird die wirksame Anzahl der Quadrate um 2 ansteigen. Analog dazu steigt die wirksame Anzahl der Quadrate um 4, 8, 16 und 32 wenn die Trimmbahnen 4b, 4c, 4d und 4e unterbrochen werden.

Ist einmal die Kodierung einer Teilstruktur bekannt, welche durch Berechnung oder eine einmalige Ausmessung des gesamten Widerstandes ermittelt werden kann, so ist es möglich, die Anzahl und Reihenfolge und damit die Kombination der Unterbrechungen so im Voraus zu berechnen, dass ein entsprechender Sollwert des Widerstandes erreicht werden kann.

Dazu ein folgendes Beispiel. Es wird eine Leiterbahnstruktur gebildet, die vor dem Abgleich 1000 Quadrate aufweist. Die Reihenfolge der Kodierung der Zunahme der Quadrate in einer Teilstruktur ist 2, 4, 8, 16, 32 und 64. Eine solche Leiterbahnstruktur wird auf eine Photomaske vervielfacht. Auf seinem Substrat wird eine temperaturabhängige Widerstandschicht mit Hilfe dieser Maske in Dünnschicht- oder mit Hilfe eines mit dieser Maske hergestellten Siebes in Dickschichttechnologie entsprechend strukturiert. Das gesamte Substrat wird in eine Messvorrichtung gebracht, und alle auf dem Substrat vorhandene Temperaturfühler kontaktiert. Gleichzeitig wird die Temperatur in der Messvorrichtung genau gemessen und der thermische Beharrungszustand abgewartet. Nach der Erreichung des Beharrungszustandes werden die Istwerte der Widerstände aller Temperaturfühler gemessen. Aus der Temperatur des Beharrungszustandes wird der Sollwert berechnet, auf den die Temperaturfühler abgeglichen werden sollen. Es lassen sich bekannterweise nur die Temperaturfühler abgleichen, deren Istwert des Widerstandes kleiner als ihr Sollwert ist. Nehmen wir als Beispiel einen Sollwert von 110 Ohm an. Einer der Widerstände weist ein Istwert von 108.6 Ohm auf. Zuerst wird der spezifische Flächenwiderstand dieses Fühlers berechnet, der 0.1086 Ohm/Quadrat ergibt. Danach wird die Differenz zwischen dem Sollwert und dem Istwert gebildet und diese Differenz durch den spezifischen Flächenwiderstand des Fühlers dividiert. Das Resultat (110-108.6)/0.1086 = 12.89 ergibt die Anzahl der Quadrate, die nötig sind, um den Widerstand des Fühlers genau auf den Sollwert zu bringen. In diesem Beispiel kann man durch die Kombination von zwei Unterbrechungen 4 + 8 = 12 den Widerstand auf besser als 0.2 % bis zum Sollwert abgleichen. Nachdem alle Widerstände auf dem Substrat ausgemessen und die jeweilige Kombinationen der Unterbrechungen bei jedem Temperaturfühler berechnet sind, kann das Substrat in eine Abgleichvorrichtung gebracht werden, in der ohne weitere Messungen alle Temperaturfühler durch Unterbrechung der durch die Berechnung vorbestimmten Trimmbahnen abgeglichen werden.

Bei dem vorgeschlagenen Verfahren ist die an sich unvermeidbare Erwärmung der Widerstandsschicht und des darunterliegenden Substrats während des Abgleichs ohne Bedeutung auf die Genauigkeit der so abgeglichenen Temperaturfühler. Die erreichbare Genauigkeit wird allein durch die Auslegung der Leiterbahnstruktur und durch die Reproduzierbarkeit der Struktur-Geometrie bestimmt. Sollte eine mangelhafte Reproduzierbarkeit bei der Herstellung der Struktur von thermosensitivem Material auf ein Substrat einen Abgleich z. B. auf 0.01 % nicht erlauben, so ist es möglich in nur zwei Schritten (1. Messung, Grobabgleich, 2. Messung, Feinabgleich) die Temperaturfühler auf die gewünschte Genauigkeit abzugleichen.

Figur 2 zeigt ein Beispiel einer gesamten bzw. fertigen Leiterbahnstruktur mit Teilstrukturen 4, Leiterbahnen 2 und Kontaktflächen 1 vor dem Abgleich. Gut erkennbar sind zwei in Serie geschaltete Teilstrukturen 4G und 4F, wovon eine 4G Trimmbahnen für einen Grob- die andere 4F Trimmbahnen für einen Feinabgleich aufweisen. Vorzugsweise sind die zu der Leiterbahn parallel geschalteten Trimmbahnen senkrecht zu einer Linie 5 und/oder 6 so angeordnet, dass sich die Unterbrechungen der Trimmbahnen beider Strukturen entlang dieser Linie 5 und/oder 6 in den zugehörigen Teilstrukturen ausführen lassen. Dies ist vor allen Dingen verfahrensökonomisch für den nachfolgenden Abgleichvorgang.

Die in den besprochenen Beispielen verwendete Kodierung für die Zunahme der Quadrate ist frei wählbar; es können auch andere passende Kodierungen verwendet werden. Beispielsweise kann ein Anfangswert von 213 Quadraten auch mit folgender Reihe der Zunahmen vorgesehen werden: 0.03, 0.04, 0.07, 0.08, 0.1, 0.1, 0.15, 0.33, 0.5 und 0.7, was ebenfalls eine berechenbare Kodierung im Sinne der Erfindung ist. Weil aber eine bestimmte Kodierung für alle mit einer entsprechenden Struktur hergestellten Temperaturfühler gleich ist, ist es besonders einfach, für jeden Fühler sehr schnell seine entsprechende Kombination der Unterbrechungen zu berechnen, die zu einem entsprechend nahen bis nächsten Wert zum vorgegebenen Sollwert führen.

Das erfindungsgemässe Verfahren besteht aus folgenden Schritten:

1. Temperaturstabilisierung eines Temperaturfühlers auf eine bestimmte Beharrungstemperatur.

2. Ausmessung des Widerstandes des Temperaturfühlers bei der Beharrungstemperatur.

3. Berechnung einer Kombination der Unterbrechungen von Trimmbahnen aus thermosensitivem Material, deren Unterbrechung den Widerstandswert am nächsten zum Sollwert des Widerstandes bei der Beharrungstemperatur bringen.

4. Die Unterbrechung der im Schritt 3 durch Berechnung vorbestimmten Trimmbahnen.

Die Ausführung der Schritte 1 und 2 kann in einer Messvorrichtung und die Ausführung des Schrittes 4 in einer Abgleichvorrichtung stattfinden, wobei die Messvorrichtung und die Abgleichvorrichtung örtlich getrennt sein können oder sind. Zeitlich getrennt ist die Messung bei Gleichgewichtstemperatur von dem das thermische Gleichgewicht störenden Abgleichvorgang. An Stelle der IST-Wert-Messung nach Abgleich, wird ein prädiktiver Verfahrensschritt vor den Abgleichvorgang eingeschoben, der die Aufgabe hat, eine gegebene Materialverteilung so auszunützen, dass beim nachfolgenden Abtrennen von Trimmbahnen das Ziel, das ist ein vorgegebener Sollwert, möglichst genau und in einem Schritt erreicht werden kann. Nach dem thermisch störenden Trennvorgang soll der gestörte Thermosensor als ein die gewünschte Genauigkeit aufweisendes Produkt vorliegen. Um eine sehr hohe Genauigkeit zu erreichen, können die Verfahrensschritte 1 bis 4 noch einmal widerholt werden.

Vorzugsweise wird eine Vielzahl von Temperaturfühlern auf einem gemeinsamen Substrat dem erfindungsgemässen Verfahren unterzogen, wobei jeder Verfahrensschritt für alle Temperaturfühler auf dem Substrat durchgeführt wird, bevor der nächste Verfahrensschritt beginnt.

Der erfindungsgemässe Temperaturfühler weist eine Leiterbahn sowie in einer Teilstruktur zu der Leiterbahn parallel geschaltete Trimmbahnen auf, deren Unterbrechungskombination eine Kodierung der Zunahme des Widerstandswertes des Temperaturfühlers ermöglichen.

Die Werte der Kodierung können bspw. einer logarithmischen Folge entnommen werden.

Für einen genauen Abgleich können zwei Teilstrukturen in der Leiterbahnstruktur des Temperaturfühlers vorgesehen sein.

Vorzugsweise sind die Trimmbahnen einer Teilstruktur so angeordnet, dass ihre Unterbrechungen in einer Linie durchführbar sind.

Das erfindungsgemässe Verfahren kann in verschiedenen Variationen erfolgen. So kann der Beharrungszustand des Temperaturfühlers in einer Thermokostantkammer erreicht werden, in der die Temperatur auf einen Sollwert geregelt wird. Der Beharrungszustand kann aber auch in einer gegenüber den Schwankungen der Aussentemperatur isolierten Vorrichtung ohne jegliche Temperaturregelung erreicht werden. Nach Einstellung des thermischen Gleichgewichts wird die genaue Temperatur gemessen; dies ergibt dann den Wert des thermischen Beharrungszustandes für die Berechnung der Kodierung. Diese isolierte Vorrichtung kann auch ein Teil der Abgleichvorrichtung sein. Die Kontaktierung des Temperaturfühlers erfolgt vorzugsweise so, dass auch die Kontakte auf die Beharrungstemperatur gebracht werden. Die Berechnung der Unterbrechungskombination kann in einem Rechner erfolgen, der die berechneten Daten einem einen Laser steuernden Rechner übermittelt oder selbst den Laser steuert. Die Unterbrechungen der Trimmbahnen können mittels Laser, Sandstrahl, Spaltelektroden, Funkenerosion oder mechanisch durch Ritzen oder Fräsen erfolgen.

**Patentansprüche**

1. Verfahren zum Abgleich eines Temperaturfühlers mit für einen Abgleich vorgesehenen Trimmbahnen mit folgenden Verfahrensschritten:

a) Der Temperaturfühler wird vor dem Messvorgang in ein Temperaturgleichgewicht gebracht und der Beharrungszustand abgewartet mit Temperaturabweichungen von höchstens 0,1 °C ;

b) in einem anschliessenden Messvorgang wird der temperaturabhängige Gesamtwiderstand des Temperaturfühlers gemessen ;

c) aus dem gemessenen temperaturabhängigen Gesamtwiderstand und der Temperatur im Beharrungszustand wird eine auf einen vorgegebenen Sollwert bezogene Kombination von Unterbrechungen von Trimmbahnen (4F) so berechnet, dass die rechenmässige Widerstandszunahme möglichst nahe bei der Differenz zwischen diesem Sollwert und dem gemessenen Gesamtwiderstand liegt ;

d) anschliessend werden in einer von der Messvorrichtung getrennten Abgleichvorrichtung die entsprechenden Unterbrechungen der Trimmbahnen (4F) vorgenommen.

2. Verfahren nach Anspruch 1, wobei die Kombination von Unterbrechungen von Trimmbahnen (4F) so berechnet wird, dass die rechenmässige Widerstandszunahme möglichst nahe bei der Differenz zwischen dem Sollwert und dem gemessenen Gesamtwiderstand liegt und kleiner als diese Differenz ist, und nach dem Abgleichvorgang ein zweiter Mess- und ein zweiter Abgleichvorgang zur Unterbrechung von Feinabgleich-Trimmbahnen (4G) durchgeführt werden.

3. Verfahren nach Anspruch 1 oder 2 unter Verwendung eines Trägersubstrates mit mehreren darauf aufgebrachten Temperaturfühlern, wobei alle Temperaturfühler im gleichen Messvorgang ausgemessen werden und anschliessend in ein und demselben Abgleichvorgang abgeglichen werden.

## Claims

1. A process for the balance of a temperature sensor by trimming strips provided for a balance and having the following process stages :

a) Before the measurement procedure, the temperature sensor is brought into a state of thermal equilibrium and a steady state condition established with maximum temperature fluctuations of 0.1 °C.

b) In a subsequent measurement procedure, the temperature-dependant total resistance of the temperature sensor is measured.

c) A combination of breakages of trimming strips (4F) is related to a given reference value calculated from the measured temperature-dependant total resistance and the steady state temperature condition so that the calculated increase in resistance is as close as possible to the difference between this reference value and the measured total resistance.

d) The breakages in the trimming strips (4F) are then made in a balancing device which is separate from the measuring device.

2. A procedure after the manner of claim 1 and in which the combination of breakages of trimming strips (4F) is calculated so that the calculated increase in resistance is as close as possible to the difference between the reference value and the total resistance and is less than this difference and that a second measurement and a second balancing procedure is undertaken for the breakage of fine balance trimming strips (4G) after the first balancing procedure.

3. A process after the manner of claim 1 or claim 2 with the application of a carrier sub-strata with several attached temperature sensors and by which all the temperature sensors are measured by the same measurement procedure and are then balanced in one and the same balancing procedure.

## Revendications

1. Procédé d'ajustage d'un capteur de température avec des pistes d'équilibrage prévues pour un ajustage, avec les étapes de procédé suivantes :

a) le capteur de température est placé en équilibre de température avant le processus de mesure et on attend l'état stationnaire avec des écarts de températures maximaux de 0,1 °C ;

b) la résistance totale du capteur de température dépendant de la température est mesurée dans un processus de mesure consécutif ;

c) une combinaison d'interruptions des pistes d'équilibrage (4F) se référant à une valeur de consigne prédéterminée est calculée à partir de la résistance totale mesurée, dépendant de la température, et de la température à l'état stationnaire, de sorte que l'augmentation de résistance, obtenue par le calcul, soit aussi près que possible de la différence existant entre cette valeur de consigne et la résistance totale mesurée ;

d) les interruptions correspondantes des pistes d'équilibrage (4F) sont ensuite réalisées dans un dispositif d'ajustage séparé du dispositif de mesure.

2. Procédé selon la revendication 1, dans lequel la combinaison des interruptions des pistes d'équilibrage (4F) est calculée de sorte que l'augmentation de résistance obtenue par le calcul se situe aussi près que possible de la différence entre la valeur de consigne et la valeur totale mesurée de la résistance et soit inférieure à cette différence, et qu'après ajustage, un deuxième processus de mesure et un deuxième processus d'ajustage sont réalisés pour interrompre les pistes d'équilibrage fin (46).

3. Procédé selon la revendication 1 ou 2 pour l'utilisation d'un substrat de support ou plusieurs capteurs de température s'y trouvant introduit ou tous les capteurs de température sont mesurés dans un processus de mesure identique et finalement sont ajustés dans un ou le même processus d'ajustage.

FIG. 1

FIG. 2

EP 0 150 784 B1